# EUROPEAN PATENT APPLICATION

(11) **EP 4 694 551 A1**
(43) Date of publication of application: **11.02.2026**
(21) Application number: 25194818.8
(22) Date of filing: 08.08.2025
(51) Int. Cl.: H04W 76/14, H04W 8/00, H04W 84/12, H04W 12/06

(54) **COMMUNICATION APPARATUS, CONTROL METHOD THEREOF, PROGRAM, AND STORAGE MEDIUM**

(30) Priority: 09.08.2024 JP 2024133832
(71) Applicant: Canon Kabushiki Kaisha, Tokyo, 146-8501 (JP)
(72) Inventor: ISHII, Takafumi, Tokyo, 146-8501 (JP)
(74) Representative: Canon Europe Limited

(57) **Abstract**

A communication apparatus including a wireless direct function to perform direct wireless communication with a peer device without an external access point includes execution means configured to perform direct wireless communication with the peer device using the wireless direct function supporting a method of exchanging a communication parameter using bootstrapping, and communication means configured to communicate a connection parameter for connecting to the external access point via the direct wireless communication performed by the execution means.

## Description

### BACKGROUND

### Field of the Technology

The present disclosure relates to a communication apparatus, a control method thereof, program and a storage medium.

### Description of the Related Art

In response to the growing volume of communicated data in recent years, the development of communication technologies, including wireless local area networks (wireless LANs), has been actively pursued. The series of Institute of Electrical and Electronic Engineers (IEEE) 802.11 standards is known as major communication standards for wireless LANs. The series of IEEE 802.11 standards includes the IEEE 802.11a/b/g/n/ac/ax standards. For example, the latest standard, IEEE 802.11ax, standardizes technologies that employ Orthogonal Frequency Division Multiple Access (OFDMA) to achieve a high peak throughput of up to 9.6 gigabits per second (Gbps) and improve communication speed under congested conditions. OFDMA is short for Orthogonal Frequency-Division Multiple Access.

On the other hand, the Wi-Fi Alliance has established programs for authenticating wireless LAN devices. For example, a standard known as Wi-Fi Direct^{®} (WFD) has been established, which defines procedures for exchanging communication parameters and establishing a communication link between wireless LAN stations (STAs) without using an access point (AP). WFD is short for Wi-Fi Direct^{®}, which is a standard for performing direct communication between apparatuses.

Further, a standard known as Wi-Fi Aware for discovering services provided by devices has also been established. For example, Japanese Patent Application Laid-Open No. 2019-201427 discusses discovering a communication terminal using the Wi-Fi Aware standard.

In a case where a communication apparatus performs wireless communication via an access point (hereinafter, "AP"), it is necessary to configure a setting to enable the communication apparatus to perform wireless communication with the AP. As a method for performing this setting, Wi-Fi Protected Setup (WPS) is known. In this method, the setting for wireless communication is configured by simultaneously pressing buttons on both the communication apparatus and the AP, or by entering a personal identification number (PIN) code issued by the AP into the communication apparatus. However, in a case where simultaneous button pressing is employed, the communication apparatus and the AP need to be placed at positions where the communication apparatus and the AP can be operated at the same time. In a case where registration is performed via a wired interface, it is necessary to prepare a wired cable and connect the communication apparatus and the AP using the wired cable, making the operation complicated. Accordingly, Japanese Patent Application Laid-Open No. 2015-23441 discusses a terminal and a communication apparatus communicating with each other and the terminal performing a process of connecting the communication apparatus to an AP.

In a case where the terminal and the communication apparatus communicate with each other and the terminal performs the process of connecting the communication apparatus to the AP, both communication security and usability are required.

### SUMMARY

The present disclosure is directed to providing a method capable of executing an appropriate setting process in a case where a terminal performs a process of connecting a communication apparatus to an access point (AP).

According to a first aspect of the present invention, there is provided a communication apparatus as specified in claims 1 to 13. According to a second aspect of the present invention, there is provided a method for controlling a communication apparatus as specified in claim 14. According to a third aspect of the present invention, there is provided a program as specified in claim 15. According to a fourth aspect of the present invention, there is provided a computer-readable storage medium as specified in claim 16.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating an example configuration of a system.
Figs. 2A and 2B are diagrams illustrating an example configuration of a multifunction peripheral (MFP).
Figs. 3A to 3C are diagrams illustrating examples of displays on an operation display unit of the MFP.
Figs. 4A and 4B are diagrams illustrating a configuration of a mobile terminal device.
Fig. 5 is a diagram illustrating a configuration of an access point.
Fig. 6 is a sequence diagram illustrating a connection process according to a conventional Wi-Fi Direct (WFD) standard.
Fig. 7 is a sequence diagram illustrating a connection process according to a new WFD standard.
Fig. 8 is a sequence diagram illustrating a process in which the mobile terminal device and the MFP connect the MFP to the AP using cableless setup (CLS).
Fig. 9 is a flowchart illustrating a process of the MFP using a new WFD standard.
Fig. 10 is a flowchart illustrating a process of the mobile terminal device using a new WFD standard.
Figs. 11A to 11C are diagrams illustrating examples of displays of wireless direct connection triggers on the operation display unit.

### DESCRIPTION OF THE EMBODIMENTS

An exemplary embodiment of the present disclosure will be described in detail below with reference to the drawings. It should be noted that the exemplary embodiment is merely an example and, unless otherwise specified, specific examples of components, steps in processes, and display screens are not intended to limit the scope of the present disclosure.

### System Configuration

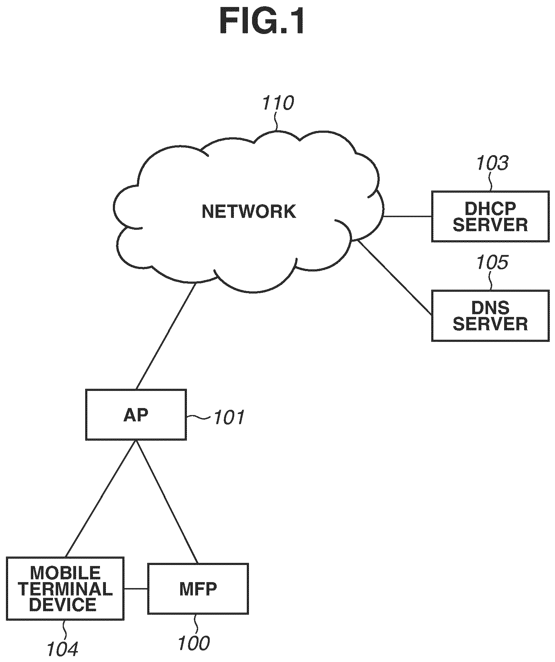

Fig. 1 illustrates an example configuration of a system according to the present embodiment. In one example, the system is a wireless communication system in which a plurality of communication devices can wirelessly communicate with each other. In the example illustrated in Fig. 1, the communication devices include a mobile terminal device 104, an MFP 100, an access point AP 101, a dynamic host configuration protocol (DHCP) server 103, a domain name system (DNS) server 105, and a network 110. The mobile terminal device 104 is a device having a wireless communication function using a wireless local area network (LAN) or the like. The wireless LAN may be hereinafter referred to as a WLAN. The mobile terminal device 104 may be, for example, a personal information terminal such as a personal digital assistant (PDA), a mobile phone (smartphone), a digital camera, or a personal computer (PC).

The MFP is one type of an electronic apparatus and one type of an information processing apparatus. The MFP 100 is a printer having a printing function. The MFP 100 may also have a reading function (scanner), a facsimile transmission (fax) function, and a telephone function. In the present embodiment, the MFP 100 also has a communication function for wirelessly communicating with the mobile terminal device 104. The present embodiment describes the MFP 100, by way of example but not limitation. Instead of the MFP 100, any other device having a communication function, such as a scanner device, a projector, a mobile terminal, a smartphone, a laptop PC, a tablet terminal, a PDA, a digital camera, a music playing device, a television, or a smart speaker, may be used. MFP is an acronym for Multi Function Peripheral.

The access point AP 101 is disposed separately from (or outside) the mobile terminal device 104 and the MFP 100, and operates as a WLAN base station device. A communication device having a WLAN communication function can perform communication in infrastructure mode for WLANs via the access point AP 101. In the following description, the access points may be referred to as "APs". The infrastructure mode for WLANs may be referred to as "wireless infrastructure mode". The access point AP 101 performs wireless communication with a communication device (authenticated communication device) allowed to connect to the access point AP 101, and relays wireless communication between the communication device and another communication device. The access point AP 101 may be connected to, for example, a wired communication network and may relay communication between a communication device connected to the wired communication network and another communication device wirelessly connected to the access point AP 101.

The DHCP server 103 is connected to the MFP 100 via the access point AP 101 and the network 110, and responds to a request from the MFP 100 to provide a service to the MFP 100. In Fig. 1, the DHCP server 103 is connected as a device different from the access point AP 101. However, the access point AP 101 may have a DHCP server function. The DNS server 105 is connected to the MFP 100 and the mobile terminal device 104 via the access point AP 101 and the network 110, and responds to a request from the MFP 100 or the mobile terminal device 104 to provide a service for name resolution. The network 110 may be the Internet, a closed network within a company, or a mobile telephone network.

### Appearance of MFP

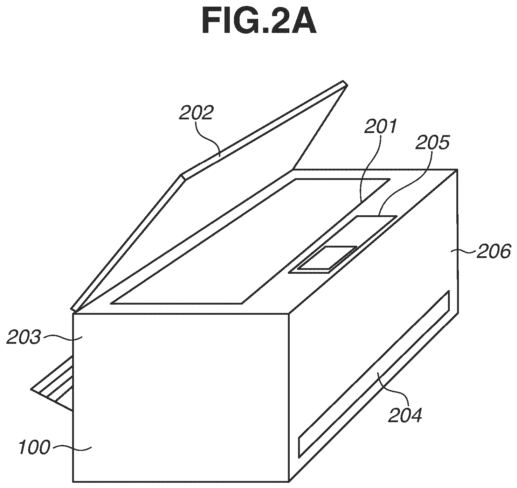

Fig. 2A illustrates an example appearance of the MFP 100. The MFP 100 includes, for example, a document table 201, a document cover 202, a print sheet insertion port 203, a print sheet discharge port 204, and an operation display unit 205. The document table 201 is a table on which a document to be read is placed. The document cover 202 is a cover to be closed to press a document placed on the document table 201 and prevent external leakage of light from a light source with which the document is irradiated during reading of the document. The print sheet insertion port 203 is an insertion port in which sheets of various sizes can be set. The print sheet discharge port 204 is a discharge port through which a printed sheet is discharged. The sheets set in the print sheet insertion port 203 are conveyed one by one to a printing unit 222 (described below), printed by the printing unit 222, and then discharged through the print sheet discharge port 204. The operation display unit 205 includes keys such as a character input key, a cursor key, an enter key, and a cancel key, a light-emitting diode (LED), a liquid crystal display (LCD), and so on. The operation display unit 205 is configured to accept operations performed by a user, such as the activation of various MFP functions and the setting of various settings. The operation display unit 205 may further include a touch panel display. The MFP 100 has a wireless communication function using a WLAN, and includes a wireless communication antenna 206 for wireless communication. The wireless communication antenna 206 may not be visible from the outside. Like the mobile terminal device 104, the MFP 100 can also perform wireless communication using a WLAN in a frequency band such as the 2.4 GHz,5 GHz, or 6 GHz band.

### Configuration of MFP

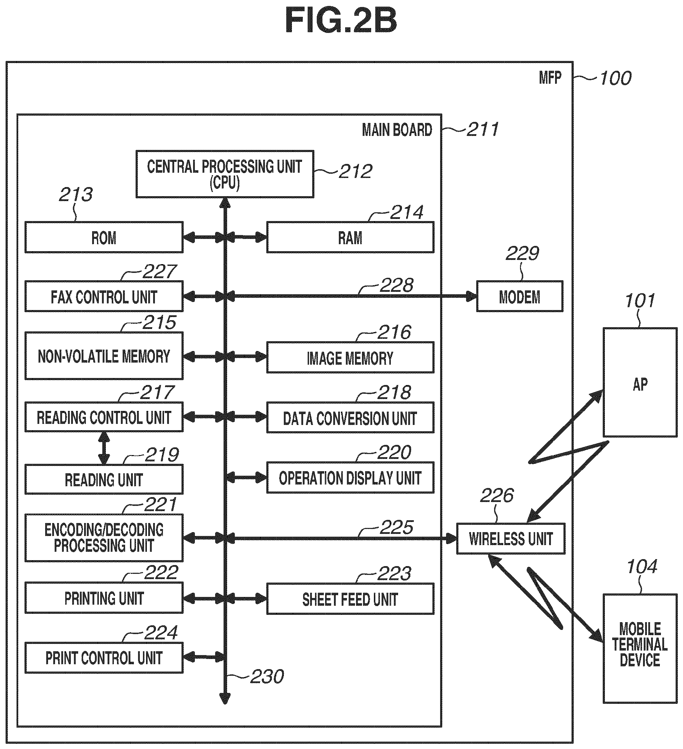

Fig. 2B illustrates an example configuration of the MFP 100. The MFP 100 includes a main board 211 for performing main control of the MFP 100, and a wireless unit 226. The wireless unit 226 is one communication module for performing WLAN communication by using at least one common antenna. The MFP 100 further includes a modem 229 for performing wired communication, for example. The main board 211 includes, for example, a central processing unit (CPU) 212, a read-only memory (ROM) 213, a random access memory (RAM) 214, a non-volatile memory 215, an image memory 216, a reading control unit 217, a data conversion unit 218, a reading unit 219, and an encoding/decoding processing unit 221. The main board 211 further includes, for example, the printing unit 222, a sheet feed unit 223, a print control unit 224, and an operation display unit 220.

The functional units in the main board 211 described above are connected to each other via a system bus 230 managed by the CPU 212. The main board 211 and the wireless unit 226 are connected via, for example, a dedicated bus 225. The main board 211 and the modem 229 are connected via, for example, a bus 228.

The CPU 212 is a system control unit including at least one processor, and controls the overall operation of the MFP 100. In one example, the processes of the MFP 100, which will be described below, are implemented by the CPU 212 executing a program stored in the ROM 213. Hardware dedicated for each of the processes may be provided. The ROM 213 stores a control program executed by the CPU 212, an embedded operating system (OS) program, and so on. In the present embodiment, the CPU 212 executes each control program stored in the ROM 213 under the management of the embedded OS stored in the ROM 213 to control software such as for scheduling and for switching tasks.

The RAM 214 includes a static random access memory (SRAM), for example. The RAM 214 stores data such as data of program control variables, setting values registered by the user, and data for managing the MFP 100. The RAM 214 may also be used as a buffer for various works. The non-volatile memory 215 includes a memory such as a flash memory, for example, and stores data continuously even after the power to the MFP 100 is turned off. The image memory 216 includes a memory such as a dynamic random access memory (DRAM). The image memory 216 stores image data received via the wireless unit 226, image data processed by the encoding/decoding processing unit 221, and so on. The memory configuration of the MFP 100 is not limited to the configuration described above. The data conversion unit 218 performs processing such as analysis of data in various formats and conversion from image data to print data.

The reading control unit 217 controls the reading unit 219 (e.g., a contact image sensor (CIS)) to optically read a document placed on the document table 201. The reading control unit 217 converts an image obtained by optically reading the document into electrical image data (image signal) and outputs the electrical image data. At this time, the reading control unit 217 may perform various kinds of image processing such as binarization and halftoning before outputting the image data.

The operation display unit 220 corresponds to the operation display unit 205 described with reference to Fig. 2A, and executes processing such as displaying on the display under display control by the CPU 212 and generating a signal in response to acceptance of a user operation.

The encoding/decoding processing unit 221 performs encoding processing, decoding processing, and enlargement/reduction processing of image data (such as Joint Photographic Experts Group (JPEG) data or Portable Network Graphics (PNG) data) handled by the MFP 100.

The sheet feed unit 223 holds sheets for printing. The sheet feed unit 223 can feed a set sheet under the control of the print control unit 224. The sheet feed unit 223 may include a plurality of sheet feed units to hold a plurality of types of sheets in a single device, and control can be performed to determine from which of the sheet feed units to feed a sheet under the control of the print control unit 224.

The print control unit 224 performs various kinds of image processing such as smoothing processing, print density correction processing, and color correction on image data to be printed, and outputs the processed image data to the printing unit 222. The printing unit 222 is configured to execute, for example, an inkjet printing process. The printing unit 222 ejects ink supplied from an ink tank through a print head and records an image on a recording medium such as a sheet of paper. The printing unit 222 may be configured to execute another printing process such as an electrophotographic printing process. Further, the print control unit 224 may periodically read information on the printing unit 222 and update, for example, status information stored in the RAM 214. The status information includes, for example, the remaining amount of the ink tank, and the state of the print head.

The wireless unit 226 is a unit capable of providing a WLAN communication function. For example, the wireless unit 226 can provide a function similar to that of a combination with a WLAN unit 401 of the mobile terminal device 104. That is, in accordance with the WLAN standard, the wireless unit 226 converts data into packets and transmits the packets to another device, or restores packets from another external device into original data and outputs the original data to the CPU 212. The wireless unit 226 can perform communication as a station conforming to the series of IEEE 802.11 standards. In particular, the wireless unit 226 can perform communication as an IEEE 802.11a/b/g/n/ac/ax station. In the following description, a station may be referred to as an STA. In addition, the wireless unit 226 can perform communication as a Wi-Fi Agile Multiband (registered trademark) STA.

The wireless unit 226 supports IEEE 802.11ax, or Wi-Fi 6 (registered trademark), and can perform processes compliant with IEEE 802.11ax. That is, the MFP 100 can perform one or both of processing of an STA supporting (or compatible with) OFDMA and an operation (processing) of an STA supporting (or compatible with) TWT. OFDMA is short for Orthogonal Frequency Division Multiple Access. TWT is short for Target Wake Time. Since the wireless unit 226 supports TWT, the timing of data communication from the master device to the STA is adjusted. The wireless unit 226 (i.e., the MFP 100) serving as an STA puts the communication function into sleep state when there is no need to wait for signal reception. This configuration can reduce power consumption. The wireless unit 226 also supports Wi-Fi 6E (registered trademark). That is, the wireless unit 226 can also perform communication over the 6 GHz band (5.925 GHz to 7.125 GHz). The 6 GHz band does not include a target band in which dynamic frequency selection (DFS) is implemented, which is included in the 5 GHz band. In the communication over the 6 GHz band, accordingly, communication disconnection caused by the DFS waiting time does not occur. As a result, it can be expected to perform more comfortable communication. Although the processes compliant with IEEE 802.11ax are performed herein, the mobile terminal device 104 and the MFP 100 may operate in compliance with another standard within the IEEE 802.11 series. For example, the mobile terminal device 104 and the MFP 100 may comply with a standard subsequent to IEEE 802.11be.

The mobile terminal device 104 and the MFP 100 can perform peer-to-peer (P2P) (WLAN) communication based on Wi-Fi Direct (WFD), and the wireless unit 226 has a software access point (Soft-AP) function or a group owner function. That is, the wireless unit 226 can establish a P2P communication network and determine a channel to be used for P2P communication. WFD herein is based on the standard established by the Wi-Fi Alliance. Further, the wireless unit 226 can also operate as a WFD client.

### Operation Display Unit of MFP

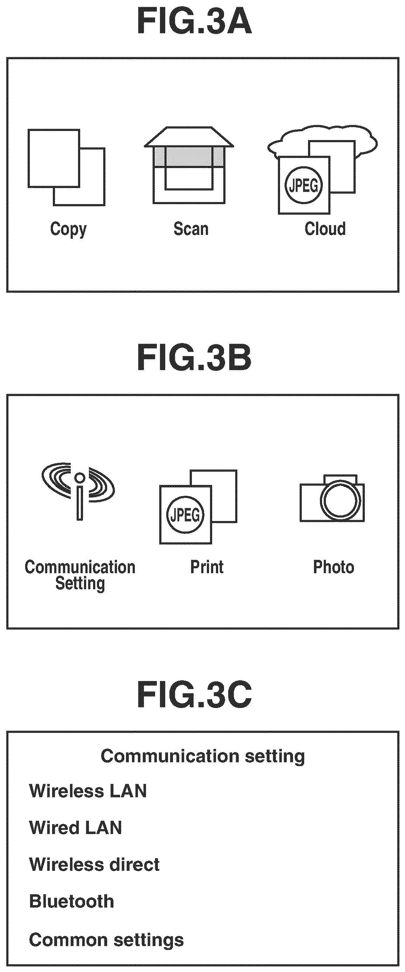

Figs. 3A to 3C schematically illustrate example screens displayed on the display (touch panel display) included in the operation display unit 220 of the MFP 100. Fig. 3A illustrates an example of a home screen displayed when operation such as printing or scanning does not take place after power to the MFP 100 is turned on (when the MFP 100 is in idle state or standby state). In Fig. 3A, display items (menu items) marked "Copy", "Scan", and "Cloud" are displayed. The item "cloud" is a menu item related to a cloud function using Internet communication. When one of the menu items is selected by a key operation or a touch panel operation, the MFP 100 can start implementing a corresponding setting or function. The MFP 100 accepts a key operation or a touch panel operation on the home screen illustrated in Fig. 3A to seamlessly display a screen different from that illustrated in Fig. 3A.

Fig. 3B illustrates a display example of another portion of the home screen. In response to an operation of displaying another page of the home screen (such as sliding from left to right or vice versa), a transition occurs from the state illustrated in Fig. 3A to a screen illustrated in Fig. 3B. In Fig. 3B, display items (menu items) marked "Communication setting", "Print", and "Photo" are displayed. When one of these menu items is selected, a function corresponding to the selected menu item, that is, one of a print function, a photo function, and communication setting, is implemented.

Fig. 3C illustrates a display example of a menu screen for communication setting, which is displayed when the communication setting is selected on the screen illustrated in Fig. 3B. The menu screen for communication setting displays menu items (options) "Wireless LAN", "Wired LAN", "Wireless direct", "Bluetooth", and "Common settings". The items "Wireless LAN", "Wired LAN", and "Wireless direct" are menu items for performing LAN setting, and one of these items is used to perform setting such as setting a wired connection, enabling or disabling the wireless infrastructure mode, or enabling or disabling the P2P mode such as WFD or Soft-AP mode. When the item "Wireless LAN" is selected and the wireless LAN is set to be enabled by a user operation, the wireless infrastructure mode is enabled. When the item "Wireless direct" is selected and wireless direct function is set to be enabled by a user operation, the P2P (WLAN) mode is enabled. This screen also displays a "Common settings" menu related to each connection mode. On this screen, the user can further set the frequency band and the frequency channel for the wireless LAN.

### Appearance of Mobile Terminal Device

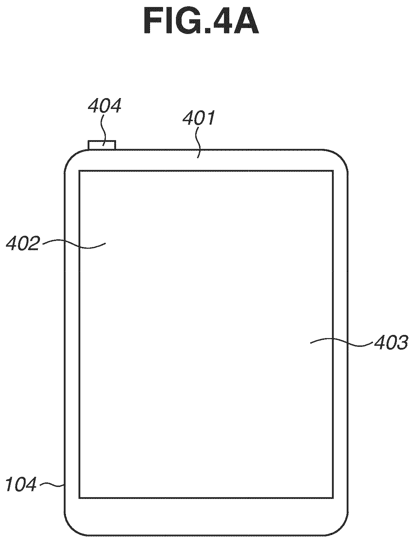

Fig. 4A is a diagram illustrating an example appearance of the mobile terminal device 104. In the present embodiment, as an example, the mobile terminal device 104 is a typical smartphone. The mobile terminal device 104 includes, for example, a display unit 402, an operation unit 403, and a power key 404. The display unit 402 is, for example, a display including an LCD display mechanism. The display unit 402 may display information by using, for example, an LED. The mobile terminal device 104 may have a function of outputting information by voice in addition to or instead of the display unit 402. The operation unit 403 includes hard keys such as keys and buttons, a touch panel, and so on to detect a user operation.

In the illustrated example, a common touch panel display is used to display information on the display unit 402 and accept a user operation by the operation unit 403. Thus, the display unit 402 and the operation unit 403 are implemented by a single device. In this case, for example, a button icon or a software keyboard is displayed using a display function of the display unit 402, and a touch by the user on the button icon or the software keyboard is detected by an operation accepting function of the operation unit 403. The display unit 402 and the operation unit 403 may be separate from each other, and hardware for display and hardware for operation acceptance may be separately provided. The power key 404 is a hard key for accepting a user operation for turning on or off the power to the mobile terminal device 104.

The mobile terminal device 104 includes a WLAN unit 401 that provides a WLAN communication function. The WLAN unit 401 may not be visible from the outside. The WLAN unit 401 is configured to execute data (packet) communication in a WLAN system conforming to, for example, the series of IEEE 802.11 standards (such as IEEE 802.11a/b/g/n/ac/ax).

In addition, the WLAN unit 401 can perform communication as a Wi-Fi Agile Multiband (registered trademark) AP. However, embodiments of the present disclosure are not limited to this configuration, and the WLAN unit 401 may be configured to execute communication in a WLAN system conforming to any other standard. In the illustrated example, it is assumed that the WLAN unit 401 can perform communication over the 2.4 GHz, 5 GHz, and 6 GHz bands. It is also assumed that the WLAN unit 401 can execute communication based on WFD, communication in the Soft-AP mode, communication in the wireless infrastructure mode, and so on. Operations in these modes will be described below.

### Configuration of Mobile Terminal Device

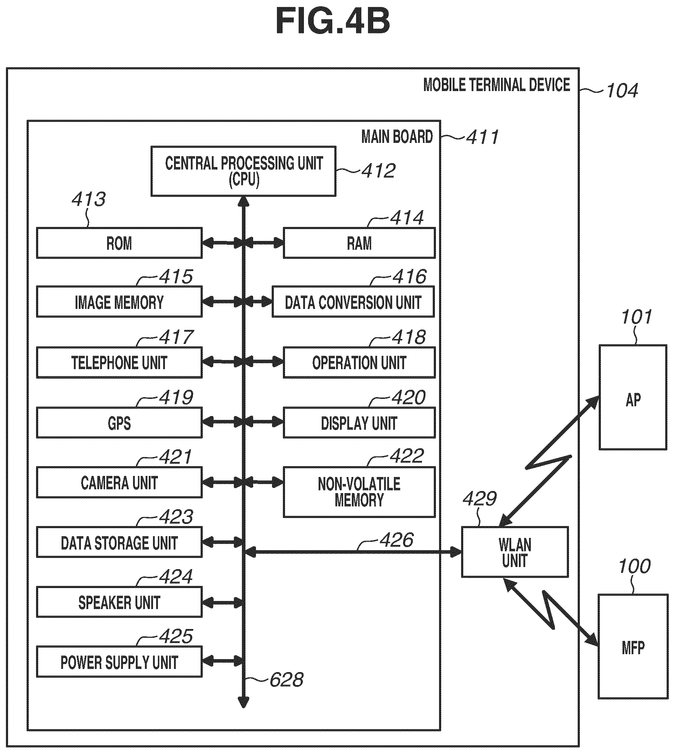

Fig. 4B illustrates an example configuration of the mobile terminal device 104. In one example, the mobile terminal device 104 includes a main board 411 for performing main control of the mobile terminal device 104, and a WLAN unit 429 that performs WLAN communication. The main board 411 includes, for example, a CPU 412, a ROM 413, a RAM 414, an image memory 415, a data conversion unit 416, a telephone unit 417, a GPS 419, a camera unit 421, a non-volatile memory 422, a data storage unit 423, a speaker unit 424, and a power supply unit 425. CPU is an acronym for Central Processing Unit, ROM is an acronym for Read Only Memory, RAM is an acronym for Random Access Memory, and GPS is an acronym for Global Positioning System. The mobile terminal device 104 further includes a display unit 420 and an operation unit 418. The functional units in the main board 411 described above are connected to each other via a system bus 628 managed by the CPU 412. The main board 411 and the WLAN unit 429 (the WLAN unit 401 described above) are connected to each other via, for example, a dedicated bus 426.

The CPU 412 is a system control unit including at least one processor, and controls the overall operation of the mobile terminal device 104. In one example, the processes of the mobile terminal device 104, which will be described below, are implemented by the CPU 412 executing a program stored in the ROM 413. Hardware dedicated for each of the processes may be provided. The ROM 413 stores a control program executed by the CPU 412, an embedded OS program, and so on. In the present embodiment, the CPU 412 executes each control program stored in the ROM 413 under the management of the embedded OS stored in the ROM 413 to control software such as for scheduling and for switching tasks.

The RAM 414 includes an SRAM, for example. The RAM 414 stores data such as data of program control variables, setting values registered by the user, and data for managing the mobile terminal device 104. The RAM 414 may also be used as a buffer for various works. The image memory 415 includes a memory such as a DRAM. The image memory 415 temporarily stores image data received via the WLAN unit 429 and image data read from the data storage unit 423 such that the CPU 412 processes the image data. The non-volatile memory 422 includes a memory such as a flash memory, for example, and stores data continuously even after the power to the mobile terminal device 104 is turned off. The memory configuration of the mobile terminal device 104 is not limited to the configuration described above. For example, the image memory 415 and the RAM 414 may be shared, or the data storage unit 423 may be used to back up data, for example. In the present embodiment, one example of the image memory 415 is a DRAM. However, any other storage medium such as a hard disk or a non-volatile memory may be used as the image memory 415.

The data conversion unit 416 performs analysis of data in various formats and data conversion such as color conversion and image conversion. The telephone unit 417 controls a telephone line and processes audio data input or output via the speaker unit 424 to implement telephone communication. The GPS 419 receives radio waves transmitted from satellites and acquires the position information such as the latitude and longitude of the current position of the mobile terminal device 104.

The camera unit 421 has a function of electronically recording and encoding an image input via a lens. The image data of an image captured by the camera unit 421 is stored in the data storage unit 423. The speaker unit 424 performs control to implement a function of inputting or outputting a voice for the telephone function or implement other functions such as an alarm notification. The power supply unit 425 is, for example, a portable battery and controls power supply to the mobile terminal device 104. The states of power supply include, for example, a depleted battery state in which the battery has no remaining capacity, a power-off state in which the power key 404 remains unpressed, an activated state in which the mobile terminal device 104 is normally activated, and a power-saving state in which the mobile terminal device 104 is activated and is in power saving mode.

The display unit 420 corresponds to the display unit 402 described with reference to Fig. 4A, and accepts various input operations and displays the operating state and status of the MFP 100, for example, under the control of the CPU 412. The operation unit 418 corresponds to the operation unit 403 described with reference to Fig. 4A. In response to a user operation, the operation unit 418 performs control to, for example, generate an electrical signal corresponding to the operation and output the electrical signal to the CPU 412.

In the mobile terminal device 104, the WLAN unit 429 is used to perform wireless communication and perform data communication with other devices such as the MFP 100. The WLAN unit 429 converts data into packets and transmits the packets to another device. Further, the WLAN unit 429 restores packets from another external device into original data and outputs the original data to the CPU 412. The WLAN unit 429 is a unit for implementing communication compliant with each WLAN standard. The WLAN unit 429 can operate concurrently in at least two communication modes including the wireless infrastructure mode and the P2P (WLAN) mode. The frequency bands used in these communication modes may be limited by hardware functions and capabilities.

### Configuration of Access Point

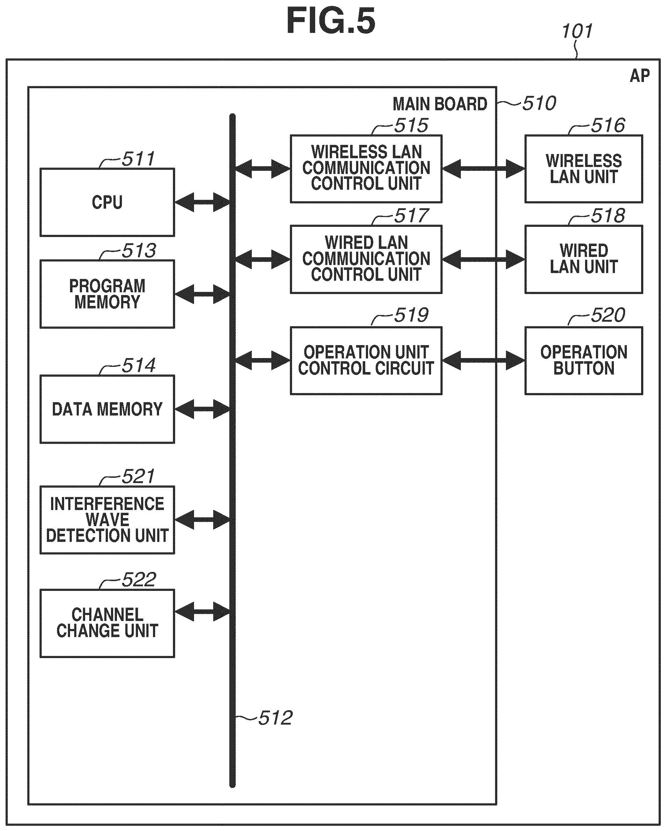

Fig. 5 is a block diagram illustrating the configuration of the access point AP 101 having a wireless LAN access point function. The access point AP 101 includes a main board 510 for controlling the access point AP 101, a wireless LAN unit 516, a wired LAN unit 518, and an operation button 520.

A CPU 511 is in the form of a microprocessor disposed on the main board 510 and operates in accordance with a control program stored in a program memory 513 in ROM form and the content of a data memory 514 in RAM form. The program memory 513 and the data memory 514 are connected to the CPU 511 via an internal bus 512. The CPU 511 controls the wireless LAN unit 516 through a wireless LAN communication control unit 515 to perform wireless LAN communication with other communication terminal devices. Further, the CPU 511 controls the wired LAN unit 518 through a wired LAN communication control unit 517 to perform wired LAN communication with other communication terminal devices. The CPU 511 can control an operation unit control circuit 519 to accept an operation from the user using the operation button 520. The CPU 511 includes at least one processor.

The access point AP 101 further includes an interference wave detection unit 521 and a channel change unit 522. The interference wave detection unit 521 performs a process of detecting an interference wave during wireless communication performed over a band (DFS-enabled band) in which DFS is implemented. In response to detection of an interference wave during wireless communication performed over a band in which DFS is implemented, the channel change unit 522 performs a process of changing a channel to be used when, for example, the channel immediately needs to be changed to an available channel.

### P2P Communication Method

Next, a brief description will be given of P2P (WLAN) communication method for allowing devices to wirelessly communicate directly with each other without using an external access point in WLAN communication. P2P (WLAN) communication can be implemented by using a plurality of methods. For example, a communication device supports a plurality of modes for P2P (WLAN) communication and selectively uses one of the plurality of modes to execute P2P (WLAN) communication. The MFP 100 and the mobile terminal device 104 are capable of performing direct wireless communication in the P2P mode and infrastructure connection communication in the infrastructure mode in parallel.

The following two P2P modes are provided:
Soft-AP mode; and
WFD mode.

A communication device capable of executing P2P communication may be configured to support at least one of these modes. However, even a communication device capable of executing P2P communication need not support all of these modes, and may be configured to support only parts of these modes.

A communication device (e.g., the mobile terminal device 104) having a WFD communication function calls an application (or a dedicated application, if any) for implementing the communication function in response to a user operation accepted via an operation unit of the communication device. Then, the communication device displays a screen of a user interface (UI) provided by the application to prompt the user to perform an operation, and can execute WFD communication in response to the acceptance of the operation performed by the user.

### Soft-AP Mode

In the Soft-AP mode, a communication device (e.g., the mobile terminal device 104) operates in the role of a client that requests various services. Then, the other communication device (e.g., the MFP 100) operates as a Soft-AP that is set by software to implement the function of an AP in the WLAN. Since commands and parameters transmitted and received in a wireless connection established between the client and the Soft-AP are commands and parameters defined by the Wi-Fi (registered trademark) standard, a description thereof will be omitted. The MFP 100 operating in the Soft-AP mode operates as a master station and determines a frequency band and a frequency channel. Accordingly, the MFP 100 can select which frequency band to use from among the 2.4 GHz, 5 GHz, and 6 GHz bands and which frequency channel to use in that frequency band. In the Soft-AP mode, there is no negotiation for determining roles, and compliance with the WFD standard established by the Wi-Fi Alliance is not necessary.

### WFD Mode

The MFP 100 may be activated as a fixed master station in the WFD mode (i.e., an autonomous group owner). It should be noted that the term "Auto GO" is sometimes used hereinafter to refer to an Autonomous Group Owner. In this case, a group owner (GO) negotiation process for determining the roles is not performed. In this case, furthermore, the MFP 100 operates as a master station and determines a frequency band and a frequency channel. Accordingly, the MFP 100 can select which frequency band to use from among the 2.4 GHz, 5 GHz, and 6 GHz bands and which frequency channel to use in that frequency band. Further, a configuration may be employed in which a negotiation (GO Negotiation) is performed in the WFD mode to determine which device serves as a group owner and which as a client.

### Wireless Infrastructure Mode

In the wireless infrastructure mode, communication devices (e.g., the mobile terminal device 104 and the MFP 100) that communicate with each other are connected to an external AP (e.g., the access point AP 101) that controls the network, and the communication between the communication devices is performed via the external AP. In other words, communication is performed between the communication devices via a network established by the external AP. The mobile terminal device 104 and the MFP 100 individually discover the access point AP 101, transmit a connection request to the access point AP 101, and connect to the access point AP 101. As a result, these communication devices can communicate with each other in the wireless infrastructure mode via the access point AP 101. A plurality of communication devices may connect to different APs. In this case, data transfer is performed between the APs to allow communication between the communication devices. Since commands and parameters transmitted and received during communication between the communication devices via an access point or access points are commands and parameters defined by the Wi-Fi (registered trademark) standard, a description thereof will be omitted. In this case, the access point AP 101 determines a frequency band and a frequency channel. Accordingly, the access point AP 101 can select which frequency band to use from among the 2.4 GHz, 5 GHz, and 6 GHz bands and which frequency channel to use in that frequency band.

It is assumed herein that WFD includes a method based on a conventional standard and a method based on a new standard. In other words, it is assumed that a plurality of methods based on different versions of the WFD standard exists. The conventional method of WFD will be referred to as "WFD Release 1 (R1)", and the new method of WFD will be referred to as "WFD Release 2 (R2)". A method compliant with a first version of the WFD standard will be referred to as "WFD R1", and a method compliant with a second version of the WFD standard will be referred to as "WFD R2".

The WFD R1 and the WFD R2 differ in device search and parameter exchange methods.

### (Connection Process according to Conventional WFD Standard)

The mobile terminal device 104 and the MFP 100 support functions published under Wi-Fi Direct. Wi-Fi Direct refers to a function that allows a Wi-Fi Direct-compatible device to establish a standalone Wi-Fi network without requiring an Internet connection. Specifically, Wi-Fi Direct-compatible devices such as the mobile terminal device 104 and the MFP 100 can connect directly to each other even in an environment without the AP 101.

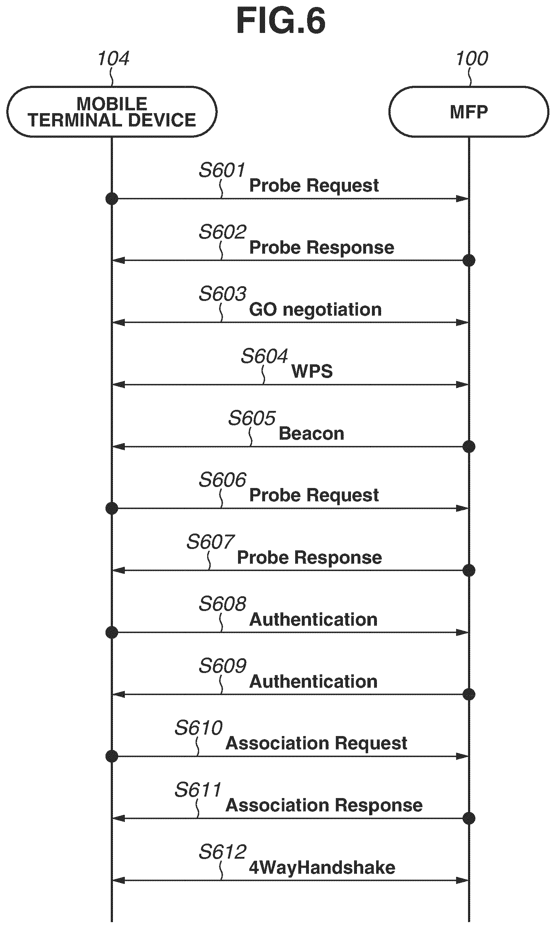

Fig. 6 is a sequence diagram illustrating a process in which the mobile terminal device 104 and the MFP 100 establish a connection in compliance with the WFD standard. A process sequence for the WFD R1 is described herein. In this sequence, the processes performed by each device are realized by a CPU of the device by reading various programs stored in a memory, such as a ROM, into a RAM and executing the programs.

For example, processing of the sequence is initiated upon receiving a WFD start instruction from the user on the mobile terminal device 104 and the MFP 100. Upon receiving a WFD start operation from the user, the mobile terminal device 104 and the MFP 100 search for peer devices by alternating between Listen and Search states. Prior to these states, a period during which each channel is scanned may be included. In the Listen state, for example, channel 1 in the 2.4 GHz band is selected, and a Probe Request frame from another communication apparatus is awaited. In the Search state, on the other hand, a Probe Request frame is transmitted while switching the frequency channel (e.g., channel 1, channel 6, channel 11), and a Probe Response frame is awaited.

In step S601, the mobile terminal device 104 transmits a Probe Request frame to search for a WFD communication apparatus. The Probe Request frame is transmitted to search for a peer device that is to be discovered. In this context, the mobile terminal device 104 is assumed to be the communication apparatus performing the search, and the MFP 100 is assumed to be the peer device that is to be discovered. The Probe Request frame includes a WFD attribute (Peer-to-Peer Information Element (P2P IE)) that specifies that the device being searched for is a WFD communication apparatus.

In step S602, the MFP 100 transmits a Probe Response frame upon receiving the Probe Request frame. By receiving the Probe Response frame transmitted from the MFP 100, the mobile terminal device 104 discovers the MFP 100 as a WFD communication peer. It should be noted that the Probe Request frame and the Probe Response frame include the P2P IE and may include a Multi-Link element. The Multi-Link element may include a communication parameter used in multi-link communication as defined in the IEEE 802.11be standard. This enables a plurality of links to be established between communication apparatuses through a single connection procedure. Accordingly, the presence of another communication apparatus can be discovered using a first search process that employs Probe Request and Response frames in the WFD R1.

The first search process described above is the search sequence of the WFD R1.

In step S603, the mobile terminal device 104 and the MFP 100 perform a GO Negotiation process. The channel to be used for direct wireless communication (wireless direct) may be determined during GO Negotiation. The mobile terminal device 104 and the MFP 100 transmit and/or receive GO Negotiation Request and Response frames including an intent value indicating the degree of preference for becoming the GO during the GO Negotiation process. The roles of the P2P group owner (GO) and the P2P client are determined using the GO Negotiation Request and Response frames.

Further, the MFP 100 may be activated as a fixed master station (GO) in the WFD mode (i.e., autonomous group owner). In this case, a GO Negotiation process for determining the roles is not performed. The MFP 100 may be configured to perform the GO Negotiation process but always operate as the GO by setting the intent value of the MFP 100 to 15, which is the maximum value. In this case, furthermore, the MFP 100 operates as a master station and determines a frequency band and a frequency channel to use in direct wireless communication. Accordingly, the MFP 100 can select which frequency band to use from among the 2.4 GHz and 5 GHz frequency bands and which frequency channel to use in that frequency band.

In step S604, the mobile terminal device 104 and the MFP 100 perform a Wi-Fi Protected Setup (WPS) process to exchange a communication parameter. The communication parameter may include a parameter used in wireless communication, such as a service set identifier (SSID), an encryption method, an encryption key, an authentication method, authentication and key management (AKM), a basic service set identifier (BSSID), and a media access control (MAC) Address. AKM is short for Authentication and Key Management. AKM indicates an authentication protocol and key exchange algorithm used in wireless communication. For example, in a case where the AKM is set to "SAE", the communication parameter may include a password for connecting to an AP or GO that supports Wi-Fi Protected Access (WPA) **III** (WPA3). Further, in a case where the AKM is set to "psk", the communication parameter may include a pre-shared key (PSK) or passphrase for connecting to an AP or GO that supports WPA2. In a case where the AKM is set to "1X", an identifier (ID), a password, and/or a public key for connecting to an AP that supports WPA-Enterprise may be included. It should be noted that the password and the PSK or passphrase serve as encryption keys in a case where authentication or key exchange is performed based on WPA or IEEE 802.11. The WPS process in step S604 corresponds to the communication parameter exchange sequence of the WFD R1. Further, a channel different from those used in steps S601 to 603 may be used for communication in step S604 and subsequent steps.

In step S605, after the MFP 100 is determined to operate as the GO, the MFP 100 starts transmitting a Beacon frame. The Beacon frame may include a communication parameter for communicating with the MFP 100. Furthermore, the Beacon frame may also include an information element (Information Element) and/or an attribute defined in the WFD standard. Accordingly, a communication apparatus other than the mobile terminal device 104 can also discover the presence of the MFP 100 and establish a direct wireless communication connection with the MFP 100. For example, another communication apparatus may discover the presence of the MFP 100 by receiving a Beacon frame including information defined in the WFD standard.

In step S606, the mobile terminal device 104 transmits a Probe Request frame to perform a connection procedure with the MFP 100. In step S607, upon receiving the Probe Request frame, the MFP 100 transmits a Probe Response frame.

In step S608, the mobile terminal device 104 transmits an Authentication frame. In step S609, upon receiving the Authentication frame, the MFP 100 transmits an Authentication frame.

In step S610, upon receiving the Authentication frame, the mobile terminal device 104 transmits an Association Request frame. In step S611, upon receiving the Association Request frame, the MFP 100 transmits an Association Response frame.

In step S612, the mobile terminal device 104 and the MFP 100 perform a 4-way handshake. By performing the foregoing steps for connection, a connection is established between the mobile terminal device 104 and the MFP 100.

Further, although not specified in the above-described sequence, the mobile terminal device 104 and the MFP 100 may be configured to transmit and/or receive Provision Discovery Request and Response frames. Further, the processes of the mobile terminal device 104 and the MFP 100 described above may also be configured in reverse.

### (Connection Process according to New WFD Standard)

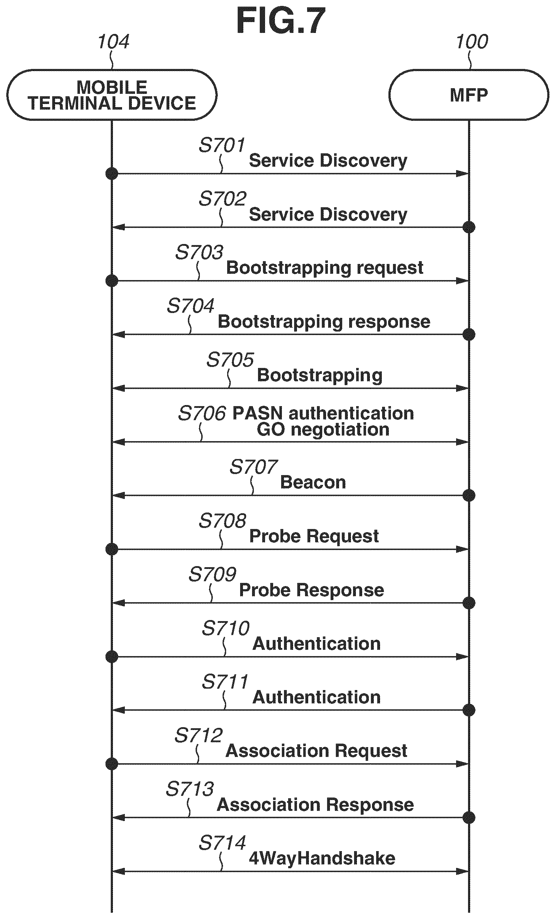

Fig. 7 is a sequence diagram illustrating a process in which the mobile terminal device 104 and the MFP 100 establish a connection in compliance with the WFD standard. A process sequence for the WFD R2 is described herein. In this sequence, the processes performed by each device are realized by a CPU of the device by reading various programs stored in a memory, such as a ROM, into a RAM and executing the programs.

For example, processing of the sequence is initiated upon receiving a WFD start instruction from the user on the mobile terminal device 104 and the MFP 100. In the search sequence of the WFD R2, a second search process is performed. An example of a search procedure according to the second search process will be described. In this search procedure, each of the mobile terminal device 104 and the MFP 100 performs processing based on whether it is a service-providing communication apparatus or a service-requesting communication apparatus, and discovers another communication apparatus. The service-providing communication apparatus may be referred to as a publisher, a listener, or an advertiser. Further, the service-requesting communication apparatus may be referred to as a subscriber, a searcher, or a seeker. For example, the service-requesting communication apparatus may transmit a frame to discover another communication apparatus. Further, the service-providing communication apparatus may receive a frame transmitted from another communication apparatus and respond to it. The roles assigned to the communication apparatuses may be determined by an upper layer (such as a service layer). In Fig. 7, an example in which the mobile terminal device 104 operates as a service-requesting communication apparatus and the MFP 100 operates as a service-providing communication apparatus is described. For example, the mobile terminal device 104 intermittently performs discovery operations and transmits a frame for discovering another communication apparatus. In the second search process, for example, a system based on the Wi-Fi Aware standard established by the Wi-Fi Alliance may be used. In other words, a frame defined in the Wi-Fi Aware standard may be used as a frame communicated in the second search process. Further, not only the Wi-Fi Aware standard but also other service search protocols or methods may be used in the second search process.

In step S701, the mobile terminal device 104 transmits a Service Discovery frame to search for a WFD communication apparatus. The Service Discovery frame herein is transmitted using channel 6 in the 2.4 GHz band. The Service Discovery frame is transmitted to search for a peer device that is to be discovered. In this context, the mobile terminal device 104 is assumed to be the searching communication apparatus, and the MFP 100 is assumed to be the peer device that is to be discovered. The Service Discovery frame includes a WFD attribute that specifies that the device being searched for is a WFD communication apparatus.

In step S702, upon receiving the Service Discovery frame, the MFP 100 transmits a Service Discovery frame. The Service Discovery frame transmitted herein may be referred to as an SDF Follow up. By receiving the Service Discovery frame, the mobile terminal device 104 discovers the MFP 100 as a WFD communication peer. The second search process described above is the search sequence of the WFD R2. Since the first search process of the WFD R1 and the second search process of the WFD R2 differ in their methods, a communication apparatus that supports only the WFD R1 cannot be discovered using the method of the WFD R2. On the other hand, a communication apparatus that supports only the WFD R2 cannot be discovered using the method of the WFD R1.

In step S703, the mobile terminal device 104 transmits a request using a Bootstrapping Request frame. The request herein is a request regarding an exchange method for communication parameter exchange. Using this frame, the mobile terminal device 104 may notify the MFP 100 of a communication parameter exchange method executable by the mobile terminal device 104, such as an exchange method involving a button press, a personal identification number (PIN) code, a passphrase, a Quick Response (QR) code^{®}, or a Near Field Communication (NFC) tag. For example, in a case where the mobile terminal device 104 can execute an exchange method using a QR code^{®}, the mobile terminal device 104 may indicate whether the mobile terminal device 104 can display or scan a QR code^{®}. Further, in a case where the mobile terminal device 104 can execute an exchange method using a passphrase, the mobile terminal device 104 may indicate whether a character string, a numeric value, or both can be used. It should be noted that in a case where the mobile terminal device 104 can execute an exchange method using a passphrase, the mobile terminal device 104 may indicate whether a passphrase can be displayed or input. Further, the mobile terminal device 104 may indicate whether a button press can be used as a trigger for communication parameter exchange. Information that can be notified by the mobile terminal device 104 is not limited to those described above.

In step S704, in response to the request using the Bootstrapping Request frame, the MFP 100 transmits a response using a Bootstrapping Response frame to the mobile terminal device 104. For example, the MFP 100 may select, from the exchange methods included in the request from the mobile terminal device 104, an exchange method executable by the MFP 100 and transmit a response including information from which the selected exchange method can be identified. Further, in a case where the exchange methods included in the request do not include any method executable by the MFP 100, a response including information indicating so may be transmitted.

In step S705, a Bootstrapping process is performed using the communication parameter exchange method determined between the communication apparatuses, thereby exchanging the communication parameter. For example, the MFP 100 displays a two-dimensional code (e.g., QR code), and the mobile terminal device 104 scans the QR code^{®}, thereby exchanging the communication parameter. The Bootstrapping process in step S705 corresponds to the communication parameter exchange sequence of the WFD R2.

In step S706, mutual authentication may be performed using Preassociation Security Negotiation (PASN) authentication. PASN is short for Preassociation Security Negotiation. A communication parameter for using PASN may include a public key of each communication apparatus. The communication parameter for using PASN may be exchanged using a method not defined in the WFD standard, such as Bluetooth. Further, as an alternative exchange method, a temporary network including an AP may be configured, and a communication apparatus may connect to the network to acquire the communication parameter. In PASN, the mobile terminal device 104 and the MFP 100 may perform the GO Negotiation process. A channel to use in direct wireless communication may be determined through GO Negotiation. The roles of the P2P group owner (GO) and the P2P client are determined in the GO Negotiation process. Further, the MFP 100 may be activated as a fixed master station in the WFD mode (i.e., autonomous group owner). In this case, a GO Negotiation process for determining the roles is not performed. The MFP 100 may be configured to perform the GO Negotiation process but always operate as the GO by setting the intent value of the MFP 100 to 15, which is the maximum value. In this case, furthermore, the MFP 100 operates as a master station and determines a frequency band and a frequency channel to use in direct wireless communication. Accordingly, the MFP 100 can select which frequency band to use from among the 2.4 GHz, 5 GHz, and 6 GHz bands and which frequency channel to use in that frequency band. The frequency bands that can be used in direct wireless communication in the WFD R1 are 2.4 GHz and 5 GHz, whereas the frequency bands that can be used in direct wireless communication in the WFD R2 also include 6 GHz in addition to 2.4 GHz and 5 GHz. Further, in the WFD R2, the roles are determined after the communication parameter is exchanged, which differs from the WFD R1. A channel different from those used in steps S701 to 706 may be used for communication in step S707 and subsequent steps.

In step S707, after the MFP 100 is determined to operate as the GO, the MFP 100 starts transmitting a Beacon frame. The Beacon frame may include a communication parameter for communicating with the MFP 100. Furthermore, the Beacon frame may also include an information element (Information Element) and/or an attribute defined in the WFD standard. Accordingly, a communication apparatus other than the mobile terminal device 104 can also discover the presence of the MFP 100 and establish a connection with the MFP 100. For example, another communication apparatus may discover the presence of the MFP 100 by receiving a Beacon frame including information defined in the WFD standard.

In step S708, the mobile terminal device 104 transmits a Probe Request frame to perform a connection procedure with the MFP 100. In step S709, upon receiving the Probe Request frame, the MFP 100 transmits a Probe Response frame.

In step S710, the mobile terminal device 104 transmits an Authentication frame. In step S711, upon receiving the Authentication frame, the MFP 100 transmits an Authentication frame.

In step S712, upon receiving the Authentication frame, the mobile terminal device 104 transmits an Association Request frame. In step S713, upon receiving the Association Request frame, the MFP 100 transmits an Association Response frame.

In step S714, the mobile terminal device 104 and the MFP 100 perform a 4-way handshake. By performing the foregoing steps for connection, a connection is established between the mobile terminal device 104 and the MFP 100.

The above-described processes of the mobile terminal device 104 and the MFP 100 described above may also be configured in reverse. Further, whether the WFD R1 or the WFD R2 is supported may be indicated in the P2P IE. Further, the WFD R1 and the WFD R2 support different security methods.

### (Display Examples during Wireless Direct Connection Process)

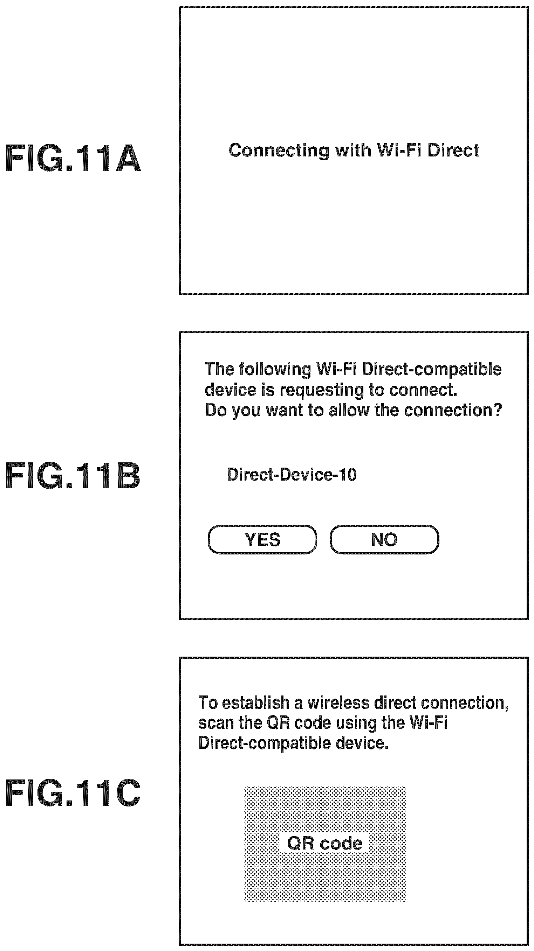

Fig. 11A illustrates an example of a screen that is displayed on the mobile terminal device 104 and the MFP 100 upon receiving a WFD start instruction from the user. While this screen is displayed, the mobile terminal device 104 and the MFP 100 search for a peer device that supports WFD. For example, in the case of a WFD R2 connection, the mobile terminal device 104 and the MFP 100 transmit a Service Discovery frame and wait for a Service Discovery frame. Further, in the case of a WFD R1 connection, the mobile terminal device 104 and the MFP 100 transmit a Probe and wait for a Probe. Although a configuration in which a search for a WFD-compatible device is performed while the screen illustrated in Fig. 11A is displayed is described above, another configuration may be employed in which a search for a WFD-compatible device is always performed regardless of the displayed screen in a case where WFD is enabled.

Fig. 11B illustrates an example of a screen displayed on the MFP 100 in a case where a peer device is discovered using the WFD R1. The screen is displayed in a case where, for example, a Probe or a GO Negotiation Request frame is received from a peer device. In a case where "YES" is selected by the user on the screen illustrated in Fig. 11B, the subsequent WFD processes proceed, and a WFD connection is established with the peer device.

Fig. 11C illustrates an example of a screen displayed on the MFP 100 in a case where a peer device is discovered using the WFD R2. The screen is displayed in a case where, for example, a Service Discovery frame or a Bootstrapping Response frame is received from a peer device. Scanning a QR code^{®} displayed on the screen using the peer device triggers the initiation of the Bootstrapping process. Thereafter, the subsequent WFD processes proceed, and a WFD connection is established with the peer device.

### (Cableless Setup)

According to the present exemplary embodiment, the mobile terminal device 104 performs a setting operation (connection setting) to enable operation of the MFP 100 in at least one communication mode selected from the infrastructure connection mode and the direct connection mode using wireless communication with the mobile terminal device 104. The connection setting process according to the present exemplary embodiment is also referred to as cableless setup (CLS), as the connection setting process is performed via wireless communication. It should be noted that the connection setting process may also be performed via wired communication. A mode in which cableless setup can be accepted will be referred to as a cableless setup mode (hereinafter, "CLS mode").

The MFP 100 in the CLS mode is activated in the Soft-AP mode that operates equivalently to an access point (master device). Therefore, an external device such as a personal computer, a smartphone, or a tablet can be easily connected to the MFP 100 as a client (slave device) and communicate with the MFP 100. It should be noted that in the CLS mode, not only the Soft-AP mode but also the WFD mode can be used. A dedicated LAN setting application that runs on an external device such as a personal computer, a smartphone, or a tablet allows a user with limited LAN knowledge to easily establish a connection with the MFP 100.

Using the dedicated LAN setting application, information necessary for identifying the access point and security information for connection are transmitted to the MFP 100 operating as a Soft-AP without requiring knowledge of detailed settings.

In CLS, upon receiving a predetermined operation on the operation display 220, the MFP 100 transitions to a mode capable of accepting a wireless LAN setting change via a wireless connection. It should be noted that the MFP 100 may transition to the CLS mode, for example, upon receiving a predetermined command via a beacon. Further, the wireless LAN setting refers to, for example, a setting for enabling or disabling the WFD function, a negotiation setting, a setting that specifies the connection destination access point for the MFP 100, a Transmission Control Protocol/Internet Protocol (TCP/IP) address setting, or a security setting. The mobile terminal device 104 can establish an infrastructure connection or a P2P connection with the MFP 100 by changing the LAN setting of the MFP 100 using CLS. Specifically, the mobile terminal device 104 can establish an infrastructure connection with the MFP 100 via an access point to which the mobile terminal device 104 is connected, by setting the access point as a connection destination for the MFP 100. Further, the mobile terminal device 104 can establish a P2P connection with the MFP 100 by either enabling the WFD function of the MFP 100 and connecting to the MFP 100 operating as a Soft-AP or operating as a Soft-AP as a result of a negotiation.

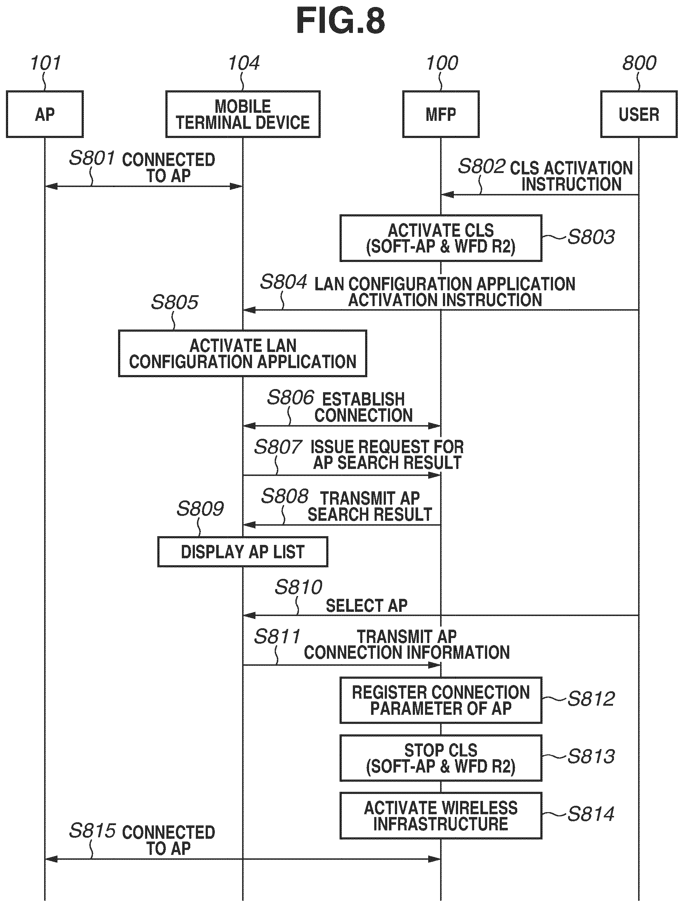

Fig. 8 is a sequence diagram illustrating a process in which the mobile terminal device 104 connected to the AP 101 and the MFP 100 not connected to an AP connect the MFP 100 to the AP 101 using CLS in step S801. In this sequence, the processes performed by each device are realized by a CPU of the device by reading various programs stored in a memory, such as a ROM, into a RAM and executing the programs.

For example, in step S802, the MFP 100 receives a CLS initiation instruction from a user 800, and the sequence is initiated. At this time, in step S803, the CLS mode of the MFP 100 is activated. However, the CLS mode may be initiated automatically when the MFP 100 is activated. The MFP 100 activates (initiates) the Soft-AP mode and the wireless direct function of the WFD R2 when CLS is activated. However, the Soft-AP activated at this point operates without communication security. In other words, communication via the Soft-AP of the MFP 100 is not encrypted because the user is not required to input a password. Further, in a case where the MFP 100 performs transmission and reception using a single antenna and the Soft-AP mode and the WFD R2 function are activated at the same time, the MFP 100 performs communication in the Soft-AP mode and communication using the WFD R2 function alternately by time division. Further, the number of antennas of the MFP 100 may be increased, and communication in the Soft-AP mode and communication using the WFD R2 function may be performed simultaneously using the plurality of antennas.

Based on a LAN setting application activation instruction from the user 800 in step S804, a wireless communication LAN setting application (an AP setting application in a case where a communication peer device (such as the MFP 100) operates in the wireless infrastructure mode) is activated on the mobile terminal device 104 in step S805.

In step S806, in a case where the mobile terminal device 104 supports and can use the WFD R2, a connection process is performed in accordance with the sequence illustrated in Fig. 7. At this time, a method that does not require a manual operation, such as button pressing, is employed in the Bootstrapping process in step S705. Accordingly, the mobile terminal device 104 and the MFP 100 can perform direct wireless communication without requiring a user operation, such as button pressing or entering a password. In the negotiation in step S706, communication following the connection is encrypted without exchanging passwords. In a case where a method that does not require a manual operation, such as button pressing, is employed in the Bootstrapping process, security information may be exchanged so that the mobile terminal device 104 and the MFP 100 encrypt the direct wireless communication, or security information may not be exchanged and the direct wireless communication may not be encrypted. Further, a method that requires a manual operation, such as button pressing or QR code^{®} scanning, may be employed in the Bootstrapping process to perform secure communication. Further, a method may be employed that exchanges communication parameters without performing Bootstrapping.

In a case where a connection is established between the mobile terminal device 104 and the MFP 100, in step S807, the mobile terminal device 104 issues a request for an AP search result to the MFP 100. In step S808, the MFP 100 transmits AP list information based on an AP discovered by the MFP 100 to the mobile terminal device 104, and in step S809, the mobile terminal device 104 displays the received AP list on the display unit 420. At this time, the mobile terminal device 104 may not issue a request for an AP search result to the MFP 100 and may display a result of an AP search performed by the mobile terminal device 104 on the display unit 420.

In step S810, the user selects the SSID of the AP 101 with which a connection is to be established from the AP list displayed on the display unit 420. An AP other than the connected AP 101 may be selected herein. In step S811, the mobile terminal device 104 transmits the connection parameter of the selected AP 101 to the MFP 100. The connection parameter is, for example, the SSID or security key for connecting to the AP 101. In step S812, the MFP 100 registers the received connection parameter of the AP 101 in the RAM 214. This enables the MFP 100 to perform wireless communication via the registered AP 101 while operating in the wireless infrastructure mode. In a case where the registration of the connection parameter of the AP 101 is completed, the MFP 100 determines that the wireless communication setup is completed, and in step S813, the MFP 100 stops CLS and disables the Soft-AP and the WFD R2 function. As a result, other terminal devices can no longer discover the MFP 100, and the MFP 100 can no longer receive a connection request or a device search packet.

In step S814, the wireless infrastructure mode of the MFP 100 is enabled to perform wireless communication using the registered connection parameter of the AP 101. Accordingly, the MFP 100 enters a state where the MFP 100 can transmit and receive wireless packets on the same frequency channel as the registered AP 101. As a result, the MFP 100 enters a state where the MFP 100 can connect to the AP 101 using the registered connection parameter of the AP 101, and in step S815, the MFP 100 enters a state where the MFP 100 can perform wireless communication via the AP 101. Accordingly, the mobile terminal device 104 can transmit print data to the MFP 100 via the AP 101.

In the communication connection in step S806, the MFP 100 may operate as a fixed master station, i.e., an autonomous group owner (Auto GO). In this case, the MFP 100 transmits a Beacon during the CLS mode and awaits a connection request from the mobile terminal device 104. In a case where the MFP 100 does not operate as an Auto GO, processing is initiated with a peer device search using the WFD search sequence.

Further, although the communication connection in step S806 is performed using the WFD R2 in the above-described example, in a case where the mobile terminal device 104 does not support the WFD R2, the communication connection may be performed in the Soft-AP mode. By operating the Soft-AP, the MFP 100 performs direct wireless communication with the mobile terminal device 104. The direct wireless communication via the Soft-AP does not require a user operation, such as entering a password, but the communication path is not encrypted (without security). The communication in the Soft-AP mode herein may be based on the WFD R1 method.

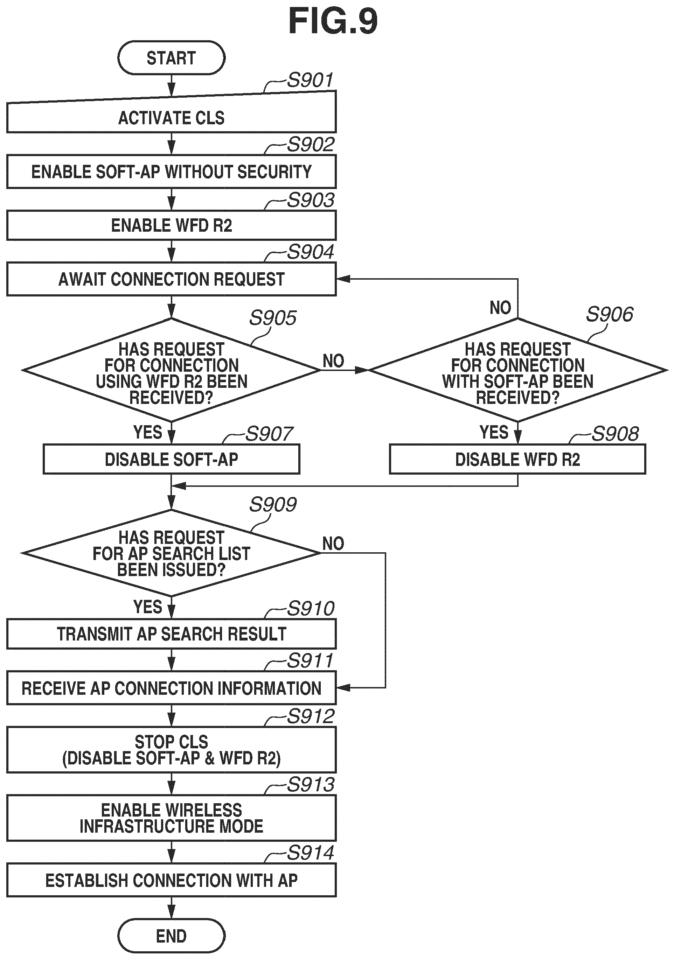

Fig. 9 is a flowchart illustrating the process performed by the MFP 100 in Fig. 8. The processes in the flowchart are realized by the CPU by reading various programs stored in a memory, such as the ROM, into the RAM and executing the programs.

In step S901, the CPU 212 activates the CLS mode of the MFP 100. In step S902, the CPU 212 enables the Soft-AP without security. In step S903, the CPU 212 enables the WFD R2 function.

In step S904, the CPU 212 enters a state where a connection request from a peer device (the mobile terminal device 104) is awaited. At this time, a Beacon frame is transmitted in a case where the MFP 100 is in the Soft-AP mode. The Beacon frame may include a device name and information indicating that the MFP 100 is in the CLS mode. The Beacon frame of the Soft-AP is not compliant with the WFD standard. Therefore, the Beacon frame does not include an information element or attribute defined in the WFD standard, and furthermore, does not include WFD R2 compatibility information. Upon receiving a Probe Request, the MFP 100 transmits a Probe response to the mobile terminal device 104. This enables the mobile terminal device 104 to detect the Soft-AP of the MFP 100.

Further, in a case where the MFP 100 serves as an Auto GO of the WFD R2, the MFP 100 transmits a Beacon frame of the WFD R2. The Beacon frame may include a device name and information indicating that the MFP 100 is in the CLS mode. The Beacon frame of the WFD R2 is compliant with the WFD standard. Therefore, the Beacon frame may include an information element or attribute defined in the WFD standard. Furthermore, the Beacon frame may also include WFD R2 compatibility information. Upon receiving a Probe Request, the MFP 100 transmits a Probe response to the mobile terminal device 104. This enables the mobile terminal device 104 to detect the Auto GO of the MFP 100 in the WFD R2. In the case of the Auto GO, since the roles have already been determined, the GO Negotiation process becomes unnecessary.

In a case where the MFP 100 does not serve as an Auto GO of the WFD R2, the MFP 100 awaits a Service Discovery frame. At this time, a Service Discovery frame may be transmitted, or the above-described waiting and transmission may be performed simultaneously. A transmitted Service Discovery frame may include a device name and information indicating that the MFP 100 is in the CLS mode. After receiving a Service Discovery frame transmitted by the mobile terminal device 104 to search for the MFP 100, the MFP 100 transmits a Service Discovery frame as a response to the received Service Discovery frame to the mobile terminal device 104. This enables the mobile terminal device 104 to detect the MFP 100 operating the WFD R2. In a case where the MFP 100 does not operate as an Auto GO, the GO Negotiation process is performed.

In step S905, the CPU 212 determines whether a request for connection using the WFD R2 has been received. In a case where the MFP 100 has received a request for connection using the WFD R2 from a peer device (YES in step S905), the connection process illustrated in Fig. 7 is performed. For example, in a case where the MFP 100 serves as an Auto GO, step S709 and subsequent steps are performed, whereas in a case where the MFP 100 does not serve as an Auto GO, step S702 and subsequent steps are performed. In a case where a connection is established, the Soft-AP is disabled in step S907. Furthermore, connection requests from the second and subsequent terminal devices supporting the WFD R2 are rejected. In a case where the MFP 100 and the mobile terminal device 104 establish a connection using the WFD R2, a user operation, such as entering a password input, is unnecessary, but communication between the MFP 100 and the mobile terminal device 104 is encrypted.

On the other hand, in a case where a request for connection using the WFD R2 has not been received (NO in step S905), in step S906, the CPU 212 determines whether a request for connection with the Soft-AP has been received. In a case where a request for connection with the Soft-AP has been received (YES in step S906), the Soft-AP connection process illustrated in Fig. 6 is performed. However, since the Soft-AP operates without security, the 4-way handshake in step S612 is not performed, and after an Association Response is transmitted in step S611, a connection is established. In a case where a connection is established, the WFD R2 is disabled in step S908. Furthermore, connection requests from the second and subsequent terminal devices supporting the Soft-AP are rejected. In a case where neither a connection using the WFD R2 nor a connection with the Soft-AP is established, the processing returns to the state where a connection request is awaited in step S904.

As a method for preventing connection establishment with any second and subsequent terminal device, the MFP 100 may be configured not to assign an IP address from the DHCP server to the terminal devices. Further, an IP filtering function may be used to reject communication with an IP address other than the IP address assigned to the initially connected mobile terminal device 104.

In step S909, the CPU 212 determines whether a request for AP search list information has been issued by the mobile terminal device 104. In a case where a request has been issued (YES in step S909), the MFP 100 performs an AP search, and in step S910, the MFP 100 transmits AP search result list information to the mobile terminal device 104. In a case where a request for AP search list information has not been issued by the mobile terminal device 104 (NO in step S909), the MFP 100 does not perform an AP search. In step S911, the CPU 212 receives the connection parameter of the AP from the mobile terminal device 104, and the MFP 100 sets the AP information in the RAM 214 as the AP to be used in the wireless infrastructure mode. Thereafter, in step S912, the MFP 100 stops CLS, and the Soft-AP mode and the WFD R2 function are disabled. In step S913, the CPU 212 enables the wireless infrastructure mode of the MFP 100 to set the MFP 100 to a state where wireless communication can be performed (the normal wireless infrastructure mode is set). In a case where the above-described sequence is correctly performed, the MFP 100 enters a state where wireless communication can be performed via the set (registered) AP 101 in step S914.

According to the above-described flowchart, in a case where the mobile terminal device 104 connects the MFP 100 to the AP, encrypted direct communication can be established between the mobile terminal device 104 and the MFP 100 by employing the WFD R2 method without requiring a user operation. In other words, communication can be performed while ensuring usability and security. Further, according to the above-described flowchart, since the MFP 100 supports both a connection using the WFD R2 and a connection with the Soft-AP, a connection can be established even in a case where the peer device supports only one of these methods. By performing the operation of awaiting a connection using the WFD R2 and the operation of awaiting a connection with the Soft-AP in parallel, the number of connectable peer devices can be increased. Furthermore, in a case where a connection is established using one method, the other connection method is stopped, thereby preventing excessive resource allocation to the connection.

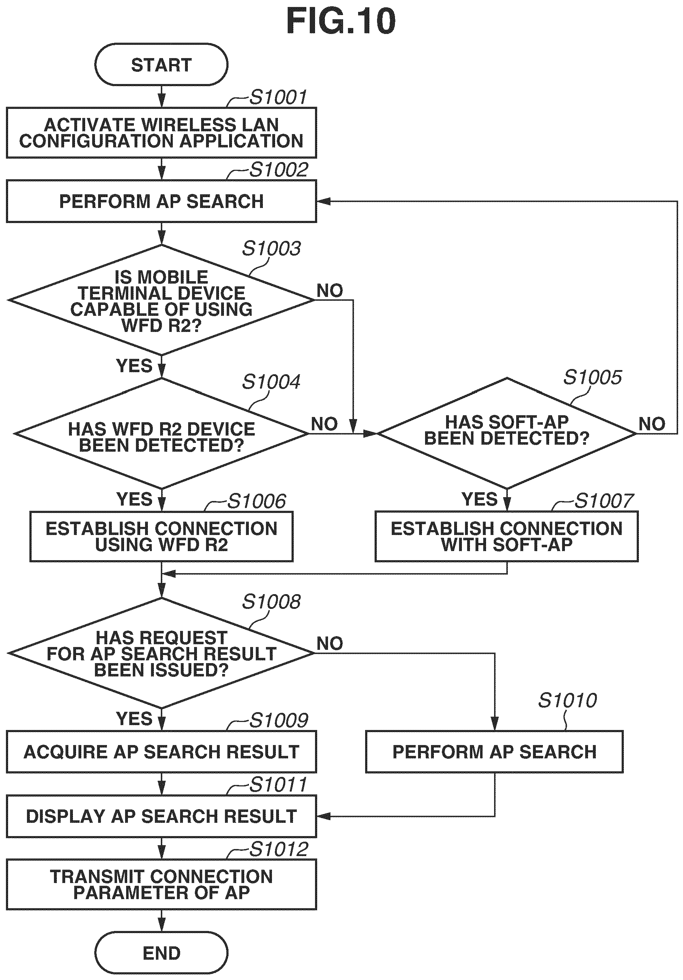

Fig. 10 is a flowchart illustrating the process performed by the mobile terminal device 104 in Fig. 8. The processes in the flowchart are realized by the CPU by reading various programs stored in a memory, such as the ROM, into the RAM and executing the programs.

In step S1001, the CPU 412 activates a wireless LAN setting application based on a user operation. This application is a program (software) stored in the non-volatile memory 422 and is installed in advance by the user.

In step S1002, the CPU 412 performs an AP search. In step S1003, the CPU 412 determines whether the mobile terminal device 104 is capable of using the WFD R2. In a case where the mobile terminal device 104 is capable of using the WFD R2 (YES in step S1003), in step S1004, the CPU 412 performs a search for a device supporting the WFD R2 and determines whether a device has been detected. In a case where a device has been detected (YES in step S1004), the processing proceeds to step S1006. Otherwise (NO in step S1004), the processing proceeds to step S1005. The search for a device supporting the WFD R2 herein refers to the transmission and reception of Service Discovery frames and the detection of a Beacon corresponding to the WFD R2. For example, in a case where the CPU 412 receives a Service Discovery frame, the CPU 412 transmits a Service Discovery frame to the MFP 100, thereby enabling the detection of the MFP 100 supporting the WFD R2. As a result, the connection process illustrated in Fig. 7 is performed in step S1006. At this time, in a case where the MFP 100 operates as a master station (i.e., autonomous group owner), the negotiation process is not performed. In a case where the mobile terminal device 104 cannot receive a Service Discovery frame from the MFP 100 because the WFD R2 is not supported, the mobile terminal device 104 stops the WFD R2 device search, and in step S1005, the mobile terminal device 104 performs a Soft-AP search. A reception period for a Service Discovery frame may be established herein, and in a case where a Service Discovery frame is not received within a predetermined time, the WFD R2 search may be stopped and switched to a Soft-AP search.

In step S1005, the CPU 412 determines whether a Soft-AP has been detected. In a case where a Soft-AP has been detected (YES in step S1005), in step S1007, the connection process is performed according to the sequence illustrated in Fig. 6. In a case where a Soft-AP that can be accessed by the mobile terminal device 104 is not detected (NO in step S1005), in step S1002, an AP search is performed again. After a connection is established between the mobile terminal device 104 and the MFP 100, in step S1008, the CPU 412 issues a request for the AP search result to the MFP 100. In step S1009, the CPU 412 acquires the AP search result from the MFP 100. At this time, a request for the AP search result to the MFP 100 may be omitted, and the mobile terminal device 104 may perform an AP search in step S1010 using a function of the mobile terminal device 104. In step S1011, the CPU 412 displays the acquired AP search result on the display unit 402, and the user selects an AP with which a connection is to be established. In step S1012, the CPU 412 transmits the connection parameter of the AP selected by the user to the MFP 100.

It should be noted that the various types of control described above as being performed by the CPU 212 or 412 may instead be performed by a single piece of hardware, or may be distributed among a plurality of hardware components (e.g., a plurality of processors or circuits), thereby enabling control of the entire device.

Further, while the present disclosure has been described in detail based on preferred embodiments of the present invention, it is to be understood that the present disclosure is not limited to the specific embodiments, and various forms that do not depart from the essence of the disclosure are also encompassed within the present disclosure. Furthermore, the disclosed embodiments merely illustrate an embodiment of the present disclosure, and the disclosed embodiments can be combined as necessary.

Further, while the disclosed embodiment describes an example of a case where the present disclosure is applied to the MFP, the present disclosure is not limited to this example, and the present disclosure is applicable to any wireless device configured to perform P2P (WLAN) communication based on WFD. That is to say, the present disclosure is applicable to personal computers, personal digital assistants (PDAs), tablet terminals, mobile phone terminals such as smartphones, music players, game machines, electronic book readers, smartwatches, and various measurement apparatuses (sensor apparatuses) such as thermometers and hygrometers. Further, the present disclosure is also applicable to digital cameras (including still cameras, video cameras, network cameras, and surveillance cameras), printers, scanners, and drones. Further, the present disclosure is also applicable to video output apparatuses, audio output apparatuses (such as smart speakers), media streaming players, and wireless LAN clients (adapters) capable of connecting to universal serial bus (USB) terminals or LAN cable terminals. A video output apparatus includes a device such as a set-top box, and acquires (downloads) moving or still images on the Internet identified by uniform resource locators (URLs) specified by the electronic apparatus and outputs the acquired images to a display device connected via a video output terminal such as a High-Definition Multimedia Interface (HDMI) (registered trademark), thereby enabling streaming reproduction on a display device or screen mirroring (content displayed on the electronic apparatus is also displayed on the display device). Further, the video output apparatuses include media players such as televisions, hard disk recorders, Blu-ray recorders, and digital versatile disk (DVD) recorders, head mounted displays, projectors, televisions, display apparatuses (monitors), and signage apparatuses. Further, the present disclosure is also applicable to Wi-Fi-enabled devices referred to as smart home appliances, such as air conditioners, refrigerators, washing machines, vacuum cleaners, ovens, microwaves, lighting fixtures, heating appliances, and cooling appliances.

The present disclosure enables the execution of an appropriate setting process in a case where a terminal performs a process of connecting a communication apparatus to an AP.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

## Claims

1. A communication apparatus including a wireless direct function to perform direct wireless communication with a peer device without an external access point, the communication apparatus comprising:
execution means configured to perform direct wireless communication with the peer device using the wireless direct function supporting a method of exchanging a communication parameter using bootstrapping; and
communication means configured to communicate a connection parameter for connecting to the external access point via the direct wireless communication performed by the execution means.

2. The communication apparatus according to claim 1, wherein the communication apparatus is configured to connect to the external access point using the connection parameter received by the communication means and to perform communication with the peer device via the external access point.

3. The communication apparatus according to claim 1, further comprising:
first execution means configured to operate the wireless direct function of a first method,
wherein the execution means is configured to operate the wireless direct function of a second method including a connection process different from a connection process of the wireless direct function of the first method and exchanging the communication parameter using the bootstrapping.

4. The communication apparatus according to claim 3, wherein the wireless direct function of the first method is a wireless direct function compliant with a first version of a Wi-Fi Direct standard, and the wireless direct function of the second method is a wireless direct function compliant with a second version of the Wi-Fi Direct standard.

5. The communication apparatus according to claim 3 or 4, wherein the wireless direct function of the second method is a wireless direct function configured to perform a peer device search using a Service Discovery frame.

6. The communication apparatus according to any one of claims 3 to 5, wherein the wireless direct function of the first method is not configured to perform a connection process with an apparatus supporting the wireless direct function of the second method, and the wireless direct function of the second method is not configured to perform a connection process with an apparatus supporting the wireless direct function of the first method.

7. The communication apparatus according to any one of claims 3 to 6, further comprising display control means configured to perform control so as to display a first screen in a case where the peer device issues a connection request using the wireless direct function of the first method, and to display a second screen in a case where the peer device issues a connection request using the wireless direct function of the second method.

8. The communication apparatus according to claim 7, wherein the first screen does not include a two-dimensional code and the second screen includes a two-dimensional code.

9. The communication apparatus according to any one of claims 1 to 8, wherein the communication of the wireless direct function and the communication with the peer device via the external access point are performed in parallel.

10. The communication apparatus according to any one of claims 1 to 9, wherein the communication apparatus is a printing apparatus configured to print an image received from the peer device using the wireless direct function.

11. The communication apparatus according to any one of claims 3 to 7, wherein the wireless direct function of the first method is a function of a software access point (Soft-AP) mode in which the communication apparatus operates as an access point.

12. The communication apparatus according to any one of claims 3 to 7 and 11, wherein the communication apparatus is configured to await a request for connection using the wireless direct function of the first method by transmitting a beacon including information indicating that the communication apparatus is in a predetermined state, in parallel with awaiting a request for connection using the wireless direct function of the second method, and in a case where a request for connection using the wireless direct function of the second method is received from the peer device, the wireless direct function of the first method is disabled.

13. The communication apparatus according to any one of claims 1 to 12, wherein the wireless direct function supporting the method of exchanging the communication parameter using bootstrapping is a wireless direct function configured to perform secure communication with the peer device without receiving a user operation for parameter exchange.

14. A control method performed by a communication apparatus including a wireless direct function to perform direct wireless communication with a peer device without an external access point, the control method comprising:
performing direct wireless communication with the peer device using the wireless direct function supporting a method of exchanging a communication parameter using bootstrapping; and
communicating a connection parameter for connecting to the external access point via the direct wireless communication.

15. A program configured to cause a computer to function as each means of the communication apparatus according to any one of claims 1 to 13.

16. A computer-readable storage medium storing a program configured to cause a computer to function as each means of the communication apparatus according to any one of claims 1 to 13.
